Europäisches Patentamt

European Patent Office

Office européen des brevets

(11) Veröffentlichungsnummer: 0 214 329
A1

## (12) EUROPÄISCHE PATENTANMELDUNG

(21) Anmeldenummer: 85111338.1

(22) Anmeldetag: 07.09.85

(51) Int. Cl.⁴: B29C 41/00 , A01G 31/02

(43) Veröffentlichungstag der Anmeldung:
18.03.87 Patentblatt 87/12

(84) Benannte Vertragsstaaten:
AT BE CH DE FR GB IT LI LU NL SE

(71) Anmelder: Behrens, Wolfgang
Annen Nr. 2
D-2833 Gross Ippener(DE)
Anmelder: Goebel, Willi
Industriestrasse
D-5790 Brilon(DE)
Anmelder: Schumacher, Hans Paul
Piwitterstrasse 12
D-4047 Dormagen(DE)

(72) Erfinder: Behrens, Wolfgang
Annen Nr. 2
D-2833 Gross Ippener(DE)
Erfinder: Goebel, Willi
Industriestrasse
D-5790 Brilon(DE)
Erfinder: Schumacher, Hans Paul
Piwitterstrasse 12
D-4047 Dormagen(DE)

(74) Vertreter: Thömen, Uwe, Dipl.-Ing.
Patentanwalt U. Thömen Zeppelinstrasse 5
D-3000 Hannover(DE)

(54) Rotationsformverfahren zur Herstellung von Kunststoffgegenständen sowie nach dem Verfahren hergestellter Pflanzenbehälter.

(57) Bekannte nach dem Rotationsformverfahren hergestellte Gegenstände, wie Pflanzenbehälter, bestehen aus PE-Kunststoff, der relativ weich, nicht kratzfest und wenig UV-beständig ist. Dadurch wird das Aussehen der Pflanzenbehälter nachteilig beeinflußt. Bei Anwendung von Pflanzensystemen ist es außerdem erforderlich, den Pflanzenbehälter durch weitere Zubehörteile zu einem Systembehälter zusammenzubauen.

Es wird vorgeschlagen, beim Rotationsgießverfahren als Basismaterial Polystyrol zu verwenden, wobei das Polystyrol-Granulat unter Beigabe von Stickstoff zu Pulver gemahlen wird. Außerdem wird der Pflanzenbehälter (10) von Anfang an einteilig als Systembehälter zur Anwendung von Hydrokulturen usw. Hergestellt. Der neue einteilige Pflanzenbehälter ist sehr hart und kann auch ohne weiteres mit einer Farbe lackiert werden, was zu einer guten UV-Beständigkeit führt.

FIG.1

## Rotationsformverfahren zur Herstellung von Kunststoffgegenständen sowie nach dem Verfahren hergestellter Pflanzenbehälter

Die Erfindung betrifft ein Rotationsformverfahren zur Herstellung von Kunststoffgegenständen, wobei pulverförmiger Kunststoff in eine Form gegeben wird, insbesondere zur Herstellung eines Pflanzenbehälters aus Kunststoff für Hydrokulturen oder dergleichen. Außerdem befaßt sich die Erfindung mit einem nach dem Rotationsformverfahren hergestellten Pflanzenbehälter.

Das Rotationsformverfahren hat bei Kunststoffen neben den üblichen Techniken wie Spritzgießen, Extrudieren oder Blasformen in letzter Zeit eine zunehmende wirtschaftliche Bedeutung gewonnen.

Bekanntlich beruht das Rotationsformverfahren im Prinzip auf einer biaxialen Bewegung, wobei sich eine oder mehrere Formen gleichzeitig um zwei zumeist senkrecht zueinander angeordnete Achsen drehen. Die Formen sind zuvor mit pulverförmigen Kunststoff gefüllt. Während der biaxialen Bewegung werden die Formen erhitzt, so daß das pulverförmige Kunststoffmaterial schmilzt und sich auf der Forminnenwand verteilt.

Unter Beibehaltung der biaxialen Bewegung wird die Form anschließend gekühlt, so daß die geschmolzene flüssige Kunststoffmasse erstarrt und sich von der Innenwand der Hohlform lösen läßt. Danach kann der geformte Kunststoffbehälter handwarm aus der Hohlform entnommen werden, die meistens zweiteilig -gegebenenfalls aber auch dreiteilig -ausgebildet ist.

Als Grundstoff für das Rotationsformverfahren zur Herstellung von Kunststoffgegenständen hat man bisher Polyethylen (PE) benutzt, weil es sich hier um ein Polymer handelt, das in der für das Rotationsformverfahren benötigten Pulverform vorliegt.

Der PE-Kunststoff läßt sich zwar beim Rotationsformverfahren gut verwenden, um Kunststoffgegenstände herzustellen, jedoch haften diesen Gegenständen erhebliche Nachteile an.

Unter optischen Gesichtspunkten ist vor allem das Erscheinungsbild von Gegenständen aus PE-Kunststoff nachteilig, denn die Oberfläche wirkt auf den Betrachter wie eine "billige" Ware. Es ist auch nicht möglich, die optisch unschöne Oberfläche eines Gegenstandes aus PE-Kunststoff im Nachhinein angenehmer zu gestalten, weil eine Lackierung nicht durchgeführt werden kann.

Ein weiterer ungünstiger Aspekt liegt darin begründet, daß der PE-Kunststoff bekanntlich keine besonders gute UV-Beständigkeit besitzt und somit anfällig gegen Sonneneinstrahlung ist. Dies führt dazu, daß der hergestellte Gegenstand nach einiger Zeit noch unansehnlicher wird. Ferner ist PE-Kunststoff relativ weich und daher kaum kratzfest. Diese Eigenschaften tragen ebenfalls dazu bei, daß die Gegenstände aus PE-Kunststoff nur bedingt einsatzfähig und optisch nachteilig aussehen.

Besonders erwähnenswert sind in dem geschilderten Zusammenhang Pflanzenbehälter aus PE-Kunststoff, die nach dem Rotationsformverfahren hergestellt sind. Bekanntlich werden Pflanzenbehälter aus Kunststoff heute in erheblichem Umfang für unterschiedliche gängige Pflanzensysteme wie Hydrokultur, Erdkultur mit Langzeitversorgung usw. benötigt und verwendet. Die voranstehend geschilderten Nachteile des bekannten Rotationsformverfahrens wirken sich gerade bei Pflanzenbehältern ungünstig aus. Die mangelnde UV-Beständigkeit, die kaum vorhandene Kratzfestigkeit sowie die weiche Materialeigenschaft von PE-Kunststoff führen in nachteiliger Weise zu einem optisch unschönen Aussehen, was aber gerade im Gegensatz zu dem Zweck der Pflanzengehälter steht , nämlich Blumen oder dergleichen aufzunehmen, um ein freundliches angenehmes Umweltbild zu schaffen.

Es ist ferner zu berücksichtigen, daß die nach dem Rotationsformverfahren hergestellten Pflanzenbehälter lediglich den nackten Behälter als solchen darstellen, der noch nicht vollständig ist. Ein kompletter Pflanzenbehälter etwa für eine Hydrokultur muß unter anderem noch eine Wasserkammer, eine Kulturkammer, einen Wassereinlauf sowie eine oder mehrere Führungen für Kapillarmatten umfassen.

Es ist deshalb in der Praxis erforderlich, die nackten Behälter nach ihrer Herstellung zu einem kompletten Pflanzenbehälter zusammen zu bauen, der für das jeweilige Pflanzensystem -z.B. Hydrokultur -eingesetzt werden kann.

Wenn man die weiter oben getroffene Feststellung berücksichtigt, daß schon seit längerer Zeit im Zusammenhang mit einem gestiegenen Umweltbewußtsein ein erhebliches und zunehmendes Bedürfnis an Pflanzenbehältern besteht, so sind die beschriebenen Nachteile natürlich als ganz besonders gravierend einzuordnen.

Hier greift die Erfindung ein, der die Aufgabe zugrunde liegt, die erwähnten Nachteile zu beseitigen und ein Rotationsformverfahren anzugeben, welches die Herstellung von Kunststoffgegenständen besserer Qualität und Anwendbarkeit ermöglicht. Insbesondere soll die Herstellung eines universell einsetzbaren kompletten Pflanzenbehälters in optisch angenehmer Ausgestaltung ermöglicht werden, und außerdem soll durch die Erfindung ein Pflanzenbehälter geschaffen werden, bei welchem auf den nachträglichen Einbau von Zubehörteilen verzichtet werden kann.

Die Lösung dieser Aufgabe erfolgt bei dem im Oberbegriff des Anspruchs 1 genannten Rotationsformverfahren dadurch, daß als Kunststoff Polystyrol verwendet wird, welches bei Kühlung zu für das Rotationsformverfahren geeignetes Polystyrol-Pulver gemahlen wird.

Die Verwendung von Polystyrol als Basismaterial beim Rotationsformverfahren zur Herstellung von Kunststoffgegenständen stellt einen überraschenden neuen Schritt dar, der zu mehreren bedeutsamen Vorteilen führt, die nachfolgend anhand eines Pflanzenbehälters erläutert werden.

So besitzt Polystyrol eine sehr hohe Schlagfestigkeit, und außerdem kann ein aus Polystyrol hergestellter Pflanzenbehälter ohne weiteres mit einer gewünschten Farbe lackiert werden. Somit ist es möglich, den Pflanzenbehälter optisch angenehm zu gestalten und eine Anpassung an Kundenwünsche bezüglich der Farben vorzunehmen. Daneben führt die Lackierbarkeit dazu, daß der neue Pflanzenbehälter extrem UV-beständig ist.

Wenn sich bei der Erfindung erstmals Polystyrol-Polymerisate verwenden lassen, so ist damit der weitere Vorteil verbunden, daß bei Feuer keine toxischen Gase, Salzsäure oder Chlorgasverbindungen· entweichen bzw. freigesetzt werden, womit einer dringenden Forderung der Abnehmer nachgekommen wird.

Die mit dem neuen Verfahren zur Herstellung von Pflanzenbehältern erzielbaren Vorteile sind auf die Verwendung von Polystyrol beim Rotationsformverfahren zurückzuführen. Es wurde eingangs schon erwähnt, daß beim Rotationsformverfahren pulverförmiges Basismaterial benötigt wird, welches in die Formen eingefüllt wird.

Polystyrol ist nun aber als Kunststoff allgemein nur in Form von Granulat erhältlich, welches für das Rotationsformverfahren so nicht geeignet ist. Das Granulat läßt sich nämlich extrem schwer zu Pulver vermahlen, und aus diesem Grunde hat man bisher auch auf die Verwendung von Polystyrol beim Rotationsformverfahren verzichtet.

Polystyrol besitzt eine sehr hohe Schlagfestigkeit, die bei der Herstellung von Pflanzenbehältern auch angestrebt wird. Je schlagfester das Polystyrol aber ist, um so größer ist der Kautschukanteil im Polystyrol. Dies würde dazu führen, daß beim Versuch, das Polystyrol-Granulat zu Pulver zu vermahlen, die Messer aufgrund der bei der hohen Festigkeit sich einstellenden hohen Temperaturen schmieren und die Herstellung von Pulver unmöglich machen.

Trotz dieser Probleme wird bei der Erfindung der Weg beschritten, Polystyrol als Pulver herzustellen, um das Polystyrol beim Rotationsformverfahren verwenden zu können. Dies wird dadurch ermöglicht, daß beim Zermahlen des Granulats Stickstoff zugegeben wird, welches die Wirkung hat, daß das Granulat und die Messer relativ kalt bleiben, womit das voranstehend erwähnte Schmieren der Messer vermieden ist und das Granulat zu Pulver vermahlen werden kann.

Ein weiterer entscheidender Vorteil der Erfindung besteht darin, daß erstmals ein Pflanzenbehälter aus Polystyrol geschaffen wird, welcher mitsamt den für die Aufnahme eines Pflanensystems erforderlichen Ausgestaltungen einteilig als integrierte Gesamtheit ausgebildet ist. Der neue einteilige Pflanzenbehälter wird also komplett gefertigt und beinhaltet bereits alle Teile, die seinen Einsatz für Pflanzensysteme wie Hydrokulturen usw. ermöglichen. Dadurch wird eine universelle Anwendbarkeit geschaffen, und es ist nicht mehr erforderlich, den Pflanzenbehälter von Hand zu dem kompletten Behälter zusammenzubauen.

So beinhaltet der Pflanzenbehälter gemäß der Erfindung in einteiliger Ausbildung bereits einen Zwischenboden für die Bildung einer Wasserkammer, und in dem Zwischenboden sind auch schon Öffnungen bzw. Führungen für die Aufnahme von in die Wasserkammer eintauchenden Kapillarmatten angeordnet.

Es sei darauf hingewiesen, daß die voranstehend geschilderten Vorteile selbstverständlich auch auf andere Kunststoffgegenstände zutreffen, die nach dem neuen Rotationsformverfahren - (Rotationsgießen) hergestellt sind.

Andere vorteilhafte Ausgestaltungen und Weiterbildungen der Erfindung sind in den Ansprüchen angegeben und der Zeichnung zu entnehmen.

Nachfolgend wird die Erfindung anhand der in der Zeichnung dargestellten Ausführungsbeispiele näher erläutert. Es zeigen:

Fig. 1 eine Seitenansicht eines runden Pflanzenbehälters,

Fig. 2 eine Draufsicht des Pflanzenbehälters gemäß Fig. 1,

Fig. 3 eine Querschnittsansicht des Pflanzenbehälters gemäß Fig. 2 längs der Schnittlinie A -A,

Fig. 4 eine Querschnittsansicht des Pflanzenbehälters gemäß Fig. 2 längs der Schnittlinie B -B in Fig. 2,

Fig. 5 eine Querschnittsansicht gemäß Fig. 3, mit einen in eine Führung des Zwischenbodens des Pflanzenbehälters eingesetzten Kapillarträger,

Fig. 6 eine Detail-Querschnittsansicht des Zwischenbodens mit einer Kapillarträgerführung, und

Fig. 7 eine schematische Draufsicht eines anderen Pflanzenbehälters mit viereckiger Form.

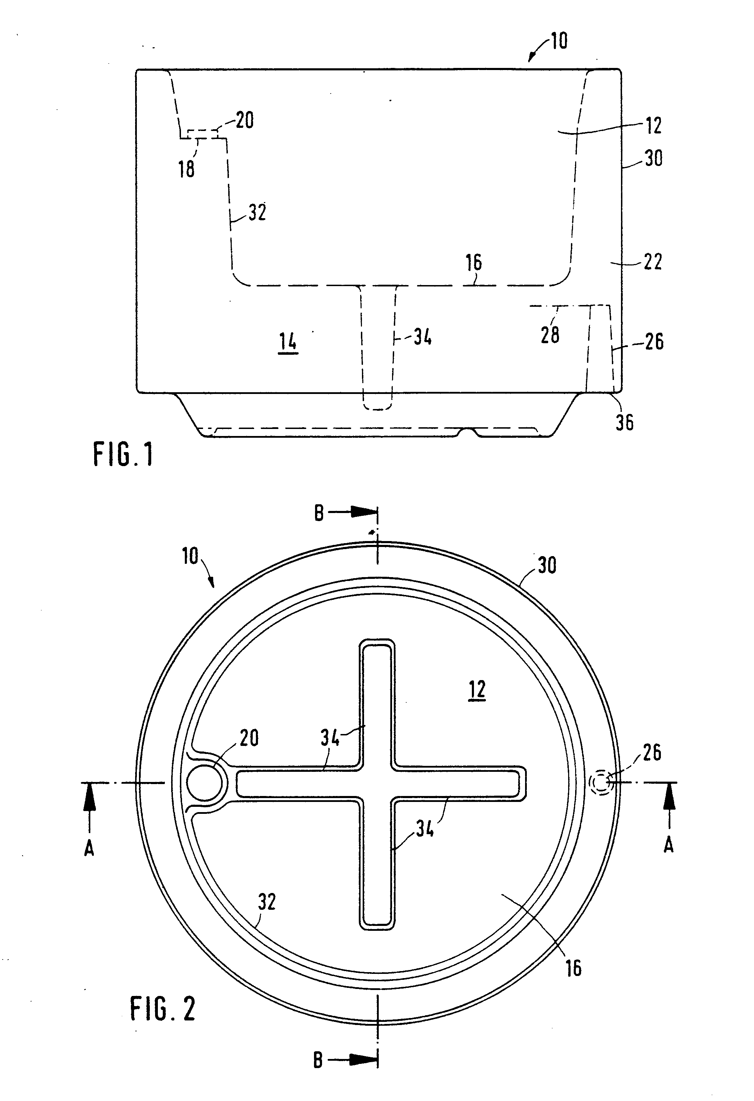

Der in Fig. 1 -5 zeichnerisch dargestellte Pflanzenbehälter 10 umfaßt eine Kulturkammer 12 und eine Wasserkammer 14. Dabei sind die Kulturkammer 12 einerseits und die Wasserkammer 14 anderseits durch einen Zwischenboden 16 voneinander getrennt.

Der Pflanzenbehälter 10 ist hohlwandig ausgebildet, so daß die äußere Seitenwand 30 und die innere Seitenwand 32 einen Hohlraum 22 zwischen sich bilden. Dieser ringförmige Hohlraum 22 geht unten in die schon erwähnte Wasserkammer 14 über.

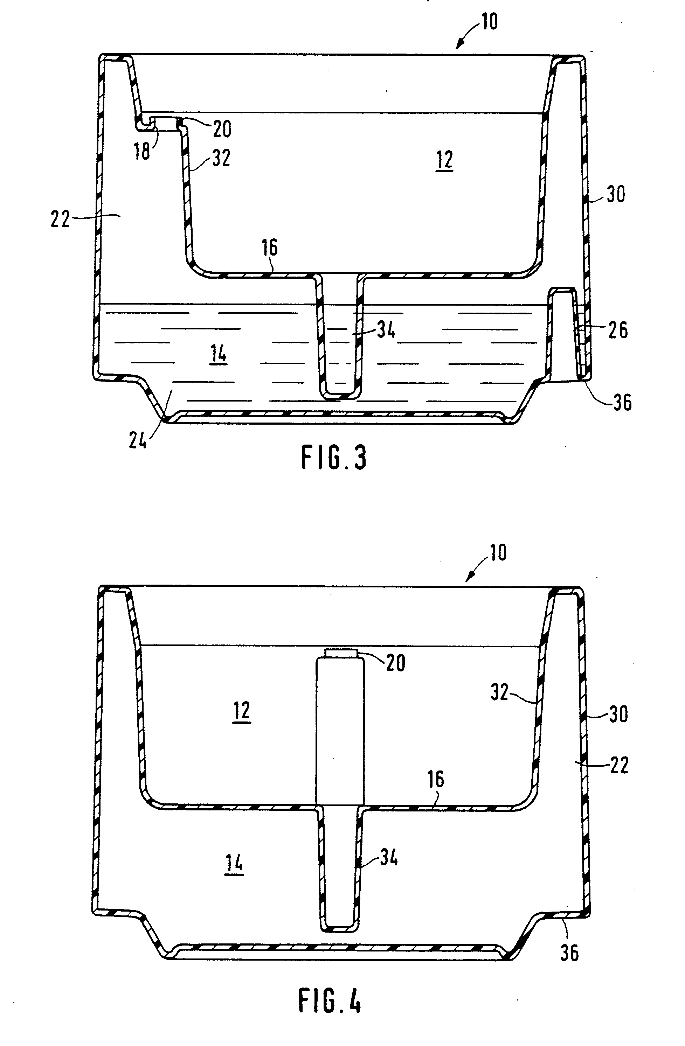

Die innere Seitenwand 32 ist an einer Stelle radial nach innen gerichtet, und auf der zugeordneten etwa waagerecht verlaufenden Fläche des entsprechenden radialen Vorsprungs befindet sich eine Einfüllöffnung 18, die mittels eines Verschlußdeckels 20 verschließbar ist. Durch die Einfüllöffnung 18 kann die Wasserkammer 14 mit Wasser 24 (vgl. Fig. 3) gefüllt werden.

Der Wasserkammer 14 ist bei dem Pflanzenbehälter 10 noch ein Überlauf 26 zugeordnet, und in Fig. 1 ist mit der Bezugsziffer 28 die maximale Füllstandshöhe bezeichnet. Wenn das Wasser über diese Füllstandshöhe steigt, fließt es durch den Überlauf 26 nach unten weg.

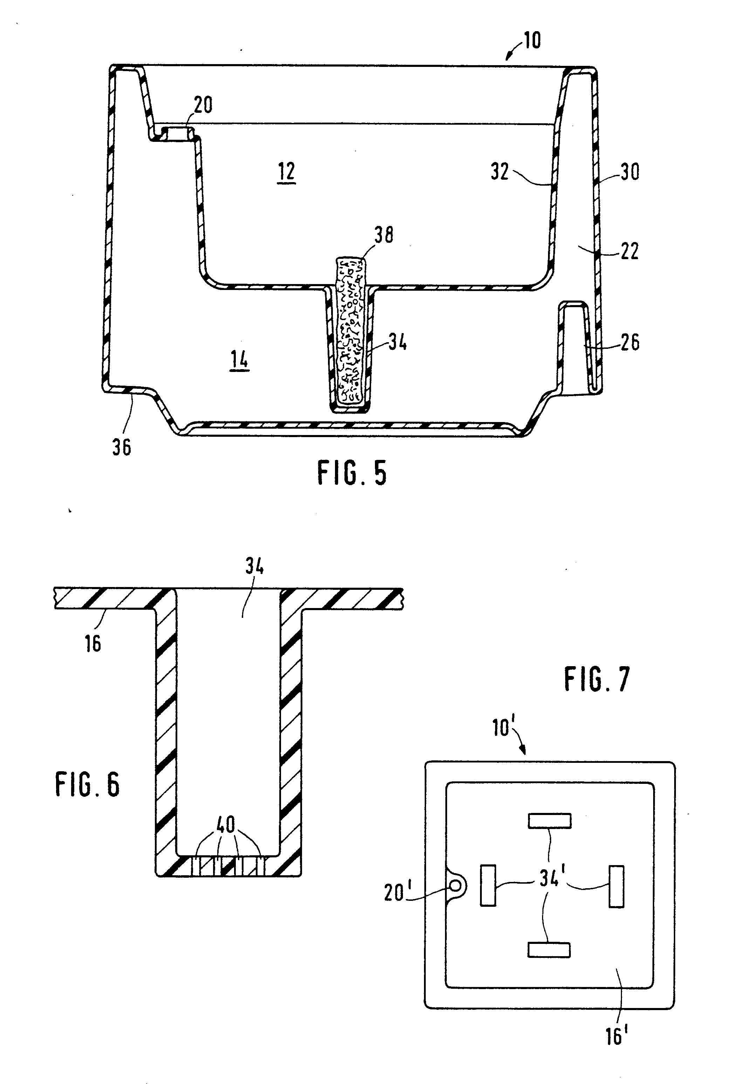

Bei der Ausführungsform gemäß Fig. 1 -5 befindet sich in dem Zwischenboden 16 eine Öffnung bzw. Führung 34, die nach Art eines Kreuzes ausgebildet ist und zur Aufnahme von an sich bekannten Kapillarträgern dient. Fig. 5 zeigt als Kapillarträger eine Kapillarmatte 38. Die Kapillarmatte 38 taucht also in die Wasserkammer 14 bzw. in das Wasser 24 ein und kann Feuchtigkeit in den Bereich der Kulturkammer 12 transportieren.

Für den Kapillarträger bzw. für die Kapillarmatten 38 kann Steinwolle, Lava, Blähton usw. eingesetzt werden. In jedem Fall besteht der Zweck der Kapillarmatten 38 darin, Wasser aus der Wasserkammer 14 nach oben in die Kulturkammer 12 zu führen, die mit einem Substrat als Nährmedium für Pflanzen oder dergleichen gefüllt ist.

Im Bereich des Bodens des Pflanzenbehälters 10 sind noch nach innen gerichtete Angriffsflächen 36 vorgesehen, die es in vorteilhafter Weise erlauben, den Pflanzenbehälter 10 mit Hilfe eines Gabelstaplers zu transportieren. Dabei bilden die Angriffsflächen 36 die Auflageflächen für die Gabel eines Gabelstaplers.

In Fig. 6 ist der nähere Aufbau der Kapillarmattenführung 34 innerhalb des Zwischenbodens 16 in einer Detail-Querschnittsdarstellung gezeigt.

In der Bodenwand der in die Wasserkammer 14 hineinragenden Führung 34 sind mehrere Löcher 40 vorgesehen, so daß das Wasser in die Führung 34 gelangen kann, in welche -vgl. Fig. 5 - eine Kapillarmatte 38 eingesetzt werden kann. Es ist selbstverständlich auch möglich, in die senkrechten Seitenwände der Führung 34 Löcher für den Wasserdurchtritt vorzusehen.

Der soweit beschriebene Pflanzenbehälter 10 ist als integrierte Einheit einteilig ausgebildet und besteht aus Polysyrol. Die Herstellung des Pflanzenbehälters 10 erfolgt nach dem an sich bekannten Rotationsformverfahren, und zwar unter Verwendung von Polystyrol in Pulverform.

Fig. 7 zeigt in einer schematischen Draufsicht eine weitere Ausführungsform eines Pflanzenbehälters 10', der hier viereckig ausgebildet ist. In der Darstellung sind der Verschlußdeckel 20' sowie der Zwischenboden 16' zu erkennen.

Die Führungen 34' sind bei dieser Ausführungsform als getrennt voneinander angeordnete Öffnungen in dem Zwischenboden 16' vorgesehen, wobei jede Führung 34' eine Kapillarmatte aufnehmen kann. Auch der Pflanzenbehälter 10' ist einteilig aus Polystyrol ausgebildet und beinhaltet als integrierte Bestandteile alles Zubehör für ein Pflanzensystem.

## Ansprüche

1. Rotationsformverfahren zur Herstellung von Kunststoffgegenständen, wobei pulverförmiger Kunststoff in eine Form gegeben wird, insbesondere zur Herstellung eines Pflanzenbehälters aus Kunststoff für Hydrokulturen oder dergleichen, dadurch gekennzeichnet, daß als Kunststoff Polystyrol verwendet wird, welches bei Kühlung zu für das Rotationsformverfahren geeignetes Polystyrol-Pulver gemahlen wird.

2. Verfahren nach Anspruch 1, dadurch gekennzeichnet, daß Polystyrol-Granulat unter Zugabe von Stickstoff zu Pulver gemahlen wird.

3. Verfahren nach Anspruch 1 und/oder 2, dadurch gekennzeichnet, daß ein einteilig ausgebildeter Kunststoff-Pflanzenbehälter (10) mit einer unteren Wasserkammer (14), einer Einfüllöffnung (18) und einem die Wasserkammer (14) oben abgrenzenden Zwischenboden (16) mit Öffnungen (34) zur Aufnahme von Kapillarmatten (38) hergestellt wird.

4. Pflanzenbehälter aus Kunststoff, hergestellt nach einem Rotationsformverfahren, dadurch gekennzeichnet, daß der Pflanzenbehälter (10) einteilig ausgebildet ist und aus Polystyrol besteht.

5. Pflanzenbehälter nach Anspruch 4, dadurch gekennzeichnet, daß der Pflanzenbehälter (10) doppelwandig (30, 32) ausgebildet ist, und daß der ringförmige Hohlraum (22) zwischen den Seitenwänden (30, 32) als Wasserzuführung dient.

6. Pflanzenbehälter nach Anspruch 4 und/oder 5, dadurch gekennzeichnet , daß der Pflanzenbehälter (10) am Boden eine Wasserkammer (14) besitzt, die oben durch einen Zwischenboden (16) abgegrenzt ist.

7. Pflanzenbehälter nach Anspruch 6, dadurch ge kennzeichnet, daß der Zwischenboden (16) mit Führungen (34) bzw. Öffnungen für in die Wasserkammer (14) eintauchende Kapillarmatten (38) versehen ist.

8. Pflanzenbehälter nach Anspruch 7, dadurch gekennzeichnet, daß die Führung (34) nach Art eines Kreuzes ausgebildet ist.

9. Pflanzenbehälter nach Anspruch 7, dadurch gekennzeichnet, daß die Führung (34') durch voneinander getrennt angeordnete Öffnungen gebildet ist.

10. Pflanzenbehälter nach Anspruch 6 und/oder 7, dadurch gekennzeichnet, daß innerhalb der Wasserkammer (14) ein Überlauf (26) vorgesehen ist.

11. Pflanzenbehälter nach Anspruch 5, dadurch gekennzeichnet, daß der ringförmige Hohlraum (22) eine durch einen lösbaren Verschluß (20) verschließbare Einfüllöffnung (18) besitzt.

12. Pflanzenbehälter nach einem der vorhergehenden Ansprüche 4 -11, dadurch gekennzeichnet , daß der Pflanzenbehälter (10) eine Halterung für einen Wasserstandsanzeiger besitzt.

13. Pflanzenbehälter nach einem der vorhergehenden Ansprüche 4 -12, dadurch gekennzeichnet , daß der Pflanzenbehälter (10) mit Angriffsflächen (36) für einen Gabelstapler oder dergleichen versehen ist.

FIG.1

FIG. 2

0 214 329

FIG. 3

FIG. 4

FIG. 5

FIG. 6

FIG. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | US-A-3 525 788 (G.J. HAHN) * Insgesamt * | 1-4 | B 29 C 41/00 A 01 G 31/02 |
| Y | US-A-2 609 150 (R.E. BLUDEAU) * Spalte 2, Zeilen 26-51; Spalte 5, Zeilen 7-71 * | 1,2 | |
| Y | US-A-2 983 076 (P.D. MERRILL) * Insgesamt * | 3-13 | |
| Y | US-A-3 451 162 (R.F. RASMUSSEN) * Spalte 3, Zeile 58 - Spalte 4, Zeile 6; Figuren 4,5 * | 6-11, 13 | |
| Y | GB-A-1 270 450 (G. BAUMANN) * Insgesamt * | 5,12 | RECHERCHIERTE SACHGEBIETE (Int. Cl.4) |
| A | US-A-3 969 475 (Y. HORIUCHI et al.) * Spalte 2, Zeilen 38-62; Spalte 5, Zeilen 31-57 * | | B 29 C B 29 B A 01 G |
| A | US-A-4 106 235 (W.J. SMITH) * Spalte 7, Zeilen 38-46; Figuren * | | |
| A | US-A-3 329 751 (R.P. SLICKER et al.) | | |

Der vorliegende Recherchenbericht wurde für alle Patentansprüche erstellt.

| Recherchenort DEN HAAG | Abschlußdatum der Recherche 22-05-1986 | Prüfer SZAMOCKI G.J.A. |
|---|---|---|